(19) **Europäisches Patentamt**

**European Patent Office**

**Office européen des brevets**

(11) Publication number: **0 459 083 B1**

(12) **EUROPEAN PATENT SPECIFICATION**

(45) Date of publication of patent specification: **28.09.94** (51) Int. Cl.5: **F02M 43/00, F02M 43/04**

(21) Application number: **91102018.8**

(22) Date of filing: **13.02.91**

(54) **Water-injection diesel engine.**

(30) Priority: **23.05.90 JP 133574/90**

(43) Date of publication of application:
**04.12.91 Bulletin 91/49**

(45) Publication of the grant of the patent:
**28.09.94 Bulletin 94/39**

(84) Designated Contracting States:
**CH DE DK FR GB IT LI NL**

(56) References cited:
**EP-A- 0 282 819**
**EP-A- 0 418 601**
**US-A- 3 933 132**

(73) Proprietor: **MITSUBISHI JUKOGYO KABUSHIKI KAISHA**
**5-1, Marunouchi 2-chome**
**Chiyoda-ku**
**Tokyo (JP)**

(72) Inventor: **Tosa, Yozo, c/o Nagasaki Technical Institute**
**Mitsubishi Jukogyo K.K.,**
**1-1, Akunoura-machi**
**Nagasaki-shi, Nagasaki-ken (JP)**
Inventor: **Nagae, Yoshinori, c/o Nagasaki Technical Institute**
**Mitsubishi Jukogyo K.K.,**
**1-1, Akunoura-machi**
**Nagasaki-shi, Nagasaki-ken (JP)**

(74) Representative: **Henkel, Feiler, Hänzel & Partner**
**Möhlstrasse 37**
**D-81675 München (DE)**

## Description

BACKGROUND OF THE INVENTION:

Field of the Invention:

The present invention relates to a water-injection diesel engine of the type that both fuel and water are injected into a combustion chamber for the purpose of reducing black smoke and an $NO_x$ content in exhaust gas and improving a fuel consumption rate and to a method for operating such water-injection diesel engine.

Description of the Prior Art:

It has been well heretofore well known that a water-added diesel engine in which water is mixed in fuel, emulsion fuel is employed or water is injected independently into a combustion chamber separately from fuel, is effective as a measure for reducing nitrogen oxides ($NO_x$) in exhaust gas of a diesel engine.

However, the above-described measure had a short-coming that it is poor in practicability, with respect to the points such that it necessitated an additive for mixing fuel with water or it necessitated an additional injection device for injecting water into a combustion chamber.

Furthermore, in the aspect of performance of the engine also, advantages of addition of water had not been fully revealed, in that as an amount of addition of water was increased, an $NO_x$ reducing effect became insufficient, black smoke in exhaust gas was increased or a fuel consumption rate was deteriorated.

EP-A-0 418 601 (not prepublished) discloses an injection device for diesel engines by which an additional fluid (fuel-alcohol or water) can be injected simultaneously with the main fuel from the same injection valve. However, in this valve the fuel path and the addition fluid path open at a needle chest serving as joining chamber and the two fluids are completely mixed in this chamber. The space between this joining chamber and the injection tip only is a slight circular gap between the valve needle and the valve seat and thus cannot accomodate a considerable amount of fuel. Due to this structure, upon operation of an injection pump, during one injection, first a small amount of fuel present at the needle seat between the needle chest and the needle tip is injected and then a mixture of the main portion of fuel and the addition fluid is injected.

The liquid-mixing injection system for an internal combustion engine known from US-A-3 933 132 comprises a fuel/water injection device for injecting fuel and water simultaneously from the same injection valve. Water is delivered to a joining section through a check valve allowing only flow towards the joining section and a control valve controlled by a control device and provided in the water path and is mixed with fuel also delivered to the joining section through a fuel path. The amount of water added to the fuel is determined by a negative pressure induced by the action of the fuel delivery valve while the control valve provided in the water path only serves to activate the water supply in accordance with various driving conditions. Like in the above injection device the water and the fuel are completely mixed before the injection process and therefore not ejected in a laminar state in a sequence fuel-water-fuel.

SUMMARY OF THE INVENTION:

It is therefore one object of the present invention to resolve the above-mentioned problems of the fuel-injection diesel engine in the prior art.

A more specific object of the present invention is to provide a water-injection diesel engine having high reliability, which is compact and has high practicability without largely modifying a fuel system in the prior art, in which water injection can be easily stopped upon start and stop of the engine, nitrogen oxides ($NO_x$) contained in exhaust gas of the diesel engine can be reduced, and moreover, reduction of black smoke in engine exhaust gas and a fuel consumption rate also can be achieved simultaneously.

In the water-injection diesel engine according to the present invention, provision is made such that both fuel and water can be injected simultaneously from a single fuel injection valve, and the novel injection system is formed by partly reconstructing the "Injection System of a Dual Fuel Engine" disclosed in Laid-Open Japanese Patent Specification No. 63-227951 (1988) (Japanese Patent Application No. 62-59816 (1987)).

According to one feature of the present invention, there is provided a water-injection diesel engine comprising a fuel/water injection device as recited in Claim 3.

According to another feature of the present invention, there is provided the above-featured water-injection diesel engine, in which the amount of water supplied to said joining section is at a volume ratio of 10 - 80% with respect to the total fuel injection amount.

According to still another feature of the present invention, there is provided a method for operating a water-injection diesel engine by means of a fuel/water injection device comprising a fuel injection valve for simultaneously injecting fuel and water and comprising the steps: during one injection firstly injecting fuel of 5% or more and 75% or less of a total fuel injection amount subsequently injecting a total predetermined amount of water and finally injecting the remaining fuel.

In operation of the subject water-injection diesel engine, delivery of fuel from a main fuel injection pump is commenced, thus fuel and water in the fuel injection valve is compressed, their pressure rises, and when the pressure exceeds a preset valve-opening pressure $P_O$ of a fuel valve, the fuel valve is opened and injection is commenced.

Upon injection, at first, fuel of 5% or more and 75% or less of a total fuel injection amount is injected into a combustion chamber, and after an ignition lag time has elapsed, combustion would start. At the same time, successively fed water is injected towards the flame of burning preceding fuel spray, at this time since the water itself also has become spray and has trapped therein air within the combustion chamber, it would feed air to the preceding fuel, and combustion would become active.

Finally the remaining fuel is injected into the preceding water spray to be burnt. In addition, at this time, as a result of thermal influence, temperature rise of a flame is suppressed and generation of $NO_x$ is also suppressed.

Through the above-described combustion process, the amount of precedingly injected fuel would largely affect good or bad of a combustion performance and suppression of generation of $NO_x$, and if the amount of preceding fuel is too small, maintenance of combustion after ignition would become difficult due to thermal influence of the succeeding water injection, resulting in unstable combustion or poor combustion, while on the contrary, if the amount of preceding fuel is too large, generation of $NO_x$ would become much due to combustion of the preceding fuel, and so, the suppression effect for generation of $NO_x$ by water injection would be offset.

As a result of combustion tests of the engine making use of the fuel/water spray system according to the present invention, it has been discovered that with regard to an operation range of the fuel/water spray system for effectively suppressing generation of $NO_x$ and being capable of simultaneously achieving reduction of black smoke in engine exhaust gas as well as reduction of a fuel consumption rate, it is an essential condition that fuel of 5% or more and 75% or less of a total fuel injection amount is firstly injected, subsequently a total amount of water (at a volume ratio of 10% to 80% with respect to a total fuel injection amount) is injected and finally the remaining fuel is wholly injected.

Furthermore, in the water-injection diesel engine according to the present invention, under an operating condition where addition of water may cause inconvenience for the engine as is the case with the time of start or stop of the engine, by stopping the operation of the control device in the water feed route, water feed can be easily stopped and the engine can be switched to an operation by fuel only.

The above-mentioned and other objects, features and advantages of the present invention will become more apparent by reference to the following description of one preferred embodiment of the invention taken in conjunction with the accompanying drawings.

BRIEF DESCRIPTION OF THE DRAWINGS:

In the accompanying drawings:
Fig. 1 is a cross-section view of a fuel/water injection device according to the present invention;
Fig. 2 is an enlarged cross-section view of a fuel/water injection valve included in the device shown in Fig. 1;
Fig. 3 is a diagram showing change of an injection rate with time; and
Fig. 4 is a diagram showing performance curves of a water-injection diesel engine according to the present invention as functions of a rate of precedingly injected fuel.

DESCRIPTION OF THE PREFERRED EMBODIMENT:

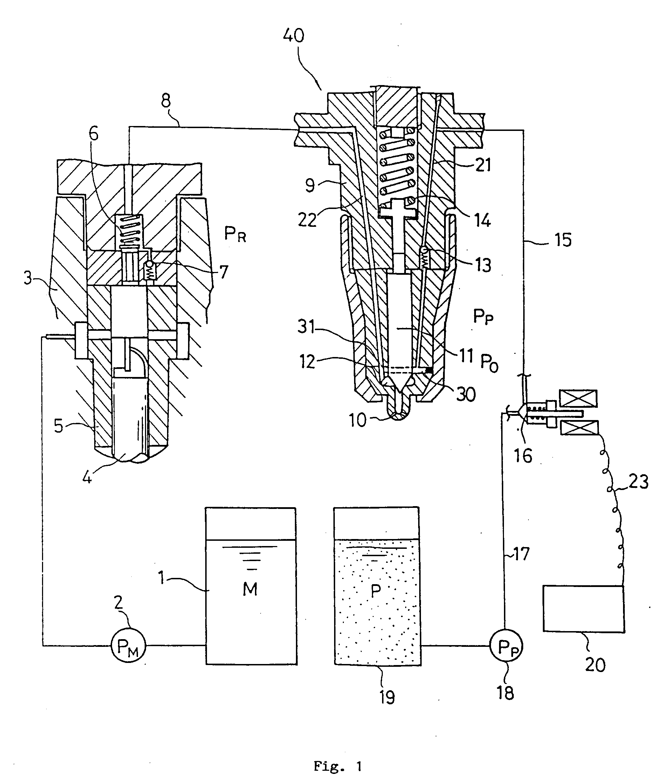

In the following, one preferred embodiment of the present invention will be described with reference to Figs. 1 to 4. In these figures, reference numeral 1 designates a fuel tank, numeral 2 designates a fuel feed pump, numeral 3 designates a fuel injection pump main body, numeral 4 designates a plunger in the same fuel injection pump, numeral 5 designates a plunger barrel, numeral 6 designates a delivery valve, numeral 7 designates a pressure-regulating check valve provided in a bypath of the delivery valve 6, numeral 8 designates a fuel injection pipe, numeral 40 designates a fuel/water injection valve, numeral 9 designates a main body of the same fuel/water injection valve 40, numeral 10 designates an injection port, numeral 11 designates a needle valve, numeral 12 designates a fuel reservoir section, and numeral 14 designates a biassing spring for the needle valve 11.

On the other hand, numeral 19 designates a water tank, numeral 18 designates a water feed pump, numeral 17 designates a water feed pipe, numeral 16 designates a water feed control valve, numeral 15 designates a water feed pipe, and numeral 13 designates a check valve in a water feed path for preventing reverse flow of water towards the control valve 16. In addition, numeral 20 designates a control device for controlling a feed amount and feed timing of water, which has a crank angle signal of the engine and other engine operation conditions input thereto and outputs a switching signal to the control valve 16 via a circuit 23.

In the main body 9 of the fuel/water injection valve 40 is drilled a fuel path 22, which communicates the fuel injection pipe 8 with the fuel reservoir section 12 of the fuel/water injection valve 40. In addition, the check valve 13 in the water feed path is connected to a joining section 31 in the midway of the above-mentioned fuel path 22 via a water path 30 drilled likewise in the main body of the fuel/water injection valve 40.

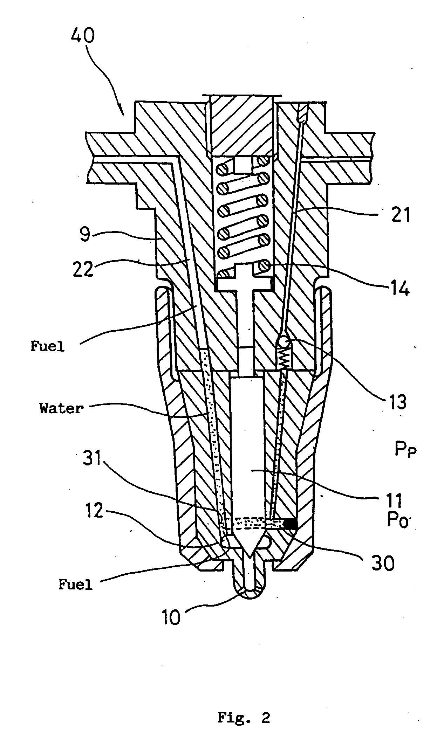

Here, regarding the position of the joining section 31, when the volume of the portion in the fuel path 22 extending from the joining section 31 to the fuel reservoir section 12 as seen in Fig. 2 is represented by $V_1$, while the volume of the fuel reservoir section 12 under the closed condition of the needle valve 11 is represented by $V_2$, and a total injection amount of fuel during one injection is represented by $V_F$, the position of the joining section 31 is determined so as to fulfil the relations of:

$$0.05 \leq \frac{V_1 + V_2}{V_F} \leq 0.75 \ .$$

Furthermore, when the valve-opening pressures of the pressure-regulating check valve 7, the check valve 13 and the needle valve 11 of the fuel injection valve are represented respectively by $P_R$, $P_P$ and $P_O$, they are preset so as to fulfil the relations of:

$P_O > P_R, P_O > P_P \ .$

Next, description will be made on an operation of the above-described preferred embodiment.

Water fed under pressure from the water tank 19 by means of the water feed pump 18 is sent through the feed pipe 17 to the control valve 16, and during a rest period of the fuel injection pump 3 when its plunger is not sending fuel under pressure, the aforementioned control valve 16 is kept in a valve-opening state for a predetermined period via the control device 20, and a predetermined amount of water is delivered to the fuel/water injection valve 40 via the water feed pipe 15. At this time, since the valve-opening pressure $P_R$ of the pressure-regulating check valve 7 of the fuel pump 3 and the valve-opening pressure $P_P$ of the check valve 13 in the water feed path fulfil the following relations with respect to the valve-opening pressure $P_O$ of the needle valve 11 as described previously:

$P_O > P_R, P_O > P_P \ ,$

the fed water flows through the check valve 13, the water path 30 and the joining section 31 into the fuel path 22.

The fuel existing on the upstream side of the joining section 31, that is, on the side of the fuel injection pump 3 within the fuel path 22 is pushed back through the fuel injection pipe 8 towards the fuel injection pump 3, forcibly opens the pressure-regulating check valve 7, and reversely flows into a plunger chamber.

Consequently, as shown in Fig. 2, the inside of the fuel/water injection valve 40 is filled with fuel having a volume $V_1 + V_2$ which is the sum of the volume $V_2$ of the fuel reservoir section 12 and the volume $V_1$ of the fuel path 22 extending from the joining section 31 up to the fuel reservoir section 12, the inside of the fuel path 22 on the upstream side of the aforementioned joining section 31 is filled with a predetermined amount of water, and further, the upstream portion of the fuel path 22 is again filled with fuel.

Subsequently, when the plunger 4 of the fuel pump 3 rises and compression of fuel is commenced, the pressure within the fuel injection pipe 8, the fuel path 22 and the fuel reservoir section 12 would rise, and when it has become the valve-opening pressure $P_O$ of the needle valve 11 or higher, the needle valve 11 is opened. At this time, owing to the action of the check valve 13, the water in the water path 30 would not be pushed back towards the water tank 19.

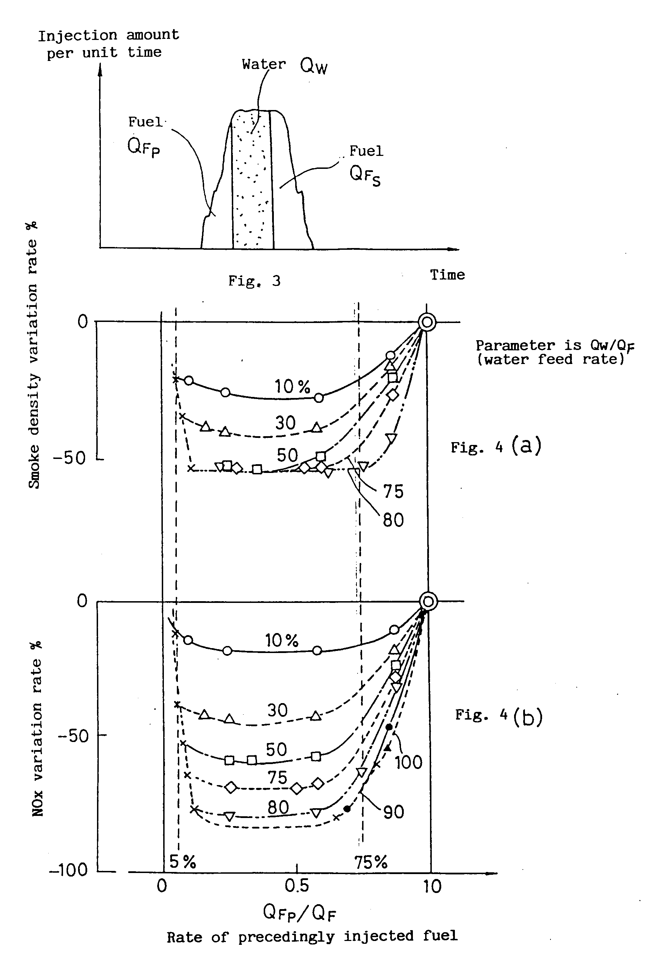

When the pressure in the needle valve 11 has reached the valve-opening pressure $P_O$, as shown in Fig. 3, at first the fuel having a volume $V_1 + V_2$ filled in the fuel reservoir section 12 and in the fuel path 22 between the joining section 31 and the fuel reservoir section 12 is injected from the injection port 10 of the fuel/water injection pump 40, subsequently a predetermined amount of fed water is injected, and finally the remaining fuel is wholly injected. In other words, representing the amount of fuel to be injected during one injection by $Q_F$, the amount $Q_{FP}$ of fuel to be injected firstly would be $Q_{FP} = V_1 + V_2$ as described above, subsequently a total amount $Q_W$ of water is injected, and if the amount of the remaining fuel is represented by $Q_{FS}$, finally the amount $Q_{FS} = Q_F - Q_{FP}$ of fuel is injected.

Operation tests were conducted by employing a diesel engine according to the illustrated embodiment, while varying the fuel injection amount $Q_{FP}$ and the water feed amount $Q_W$ by changing the position of the above-described joining section 31. The test results were arranged and shown in Figs. 4(a) and 4(b), taking $Q_W/Q_F$ as a parameter, a precedingly injected fuel ratio $Q_{FP}/Q_F$ along the abscissa, and a variation rate of a smoke density or an $NO_x$ content along the ordinate.

With reference to these figures, it has been discovered that as the parameter of water feed rate $Q_W/Q_F$ is increased, reduction of an $NO_x$ content and a smoke density of engine exhaust gas is attained, and the reducing effect is remarkable at the range of 5% or more and 75% or less of a precedingly injected fuel rate $Q_{FP}/Q_F$. In these figures, marks X indicate such limit point that in the region of less $Q_{FP}/Q_F$ than at the limit point, a normal operation of the engine is difficult due to misfire or unstable combustion. Furthermore, in view of the fact that if $Q_W/Q_F$ exceeds 80%, a normal operation can be attained only at a large value of $Q_{FP}/Q_F$ and also an amount of reduction of an $NO_x$ content is saturated, the invention is effective in the range of 10% or more and 80% or less of $Q_W/Q_F$.

As will be obvious from the detailed description of one preferred embodiment of the present invention, according to the present invention, owing to the fact in a fuel/water injection device formed so as to be able to inject fuel and water simultaneously from a same fuel injection valve, a fuel path configuration and a water feed position in a fuel injection valve are designed in such manner that during one injection, fuel of 5% or more and 75% or less of a total fuel injection amount is firstly injected, subsequently a total amount of water at a volume ratio of 10% to 80% with respect to the total fuel injection amount is injected and finally the remaining fuel is wholly injected, reduction of an $NO_x$ content and reduction of a smoke density in exhaust gas of a diesel engine can be effectively realized, and also reduction of a fuel consumption expense by improvement in combustion can be obtained.

In addition, even in an apparatus having a different construction from the illustrated embodiment also, the same advantage as that of the illustrated embodiment can be obtained by injecting both fuel and water from a same injection valve, and during one injection, firstly injecting fuel of 5% or more and 75% or less of a total fuel injection amount, subsequently injecting a total amount of water and finally injecting the remaining fuel wholly as having become obvious from the above description.

Since the water-injection diesel engine according to the present invention is constructed in the above-described manner, nitrogen oxides ($NO_x$) in exhaust gas can be effectively reduced, and also reduction of black smoke in exhaust gas and reduction of a fuel consumption rate can be simultaneously realized.

## Claims

1. A method for operating a water-injection diesel engine by means of a fuel/water injection device comprising a fuel injection valve (40) for simultaneously injecting fuel and water, characterized by the steps: during one injection firstly injecting fuel of 5% or more and 75% or less of a total fuel injection amount, subsequently injecting a predetermined amount of water, and finally injecting the remaining fuel.

2. A method for operating a water-injection diesel engine as claimed in claim 1, wherein said predetermined amount of water is at a volume ratio of 10 - 80 % with respect to the total fuel injection amount.

3. A water-injection diesel engine comprising a fuel/water injection device including a fuel injection valve (40) for simultaneously injecting fuel and water, wherein said fuel injection valve (40) includes a water path (21) in which a check valve (13) is provided for admitting only a flow of water to flow towards a joining section (31) where a fuel path (22) and said water path (21) join together, and
said water path (21) further is connected to a control valve (16) which is controlled by a control device (20) to limit an amount of water supplied to said joining section (31) to a predetermined amount,
characterized by a fuel reservoir section (12) located on a downstream side of said joining section (31) and connected to said joining section (31) by a portion of said fuel path (22),
said fuel reservoir section (12) and said portion of said fuel path (22) between said fuel reservoir section (12) and said joining section (31) being designed to have a total volume to accomodate fuel between 5% and 75% of a total fuel injection amount, and said joining section (31) designed so as to substantially not allow mixing of the supplied water with the fuel so that a total amount of water is injected being sandwiched between fuel injection amount portions.

4. A water-injection diesel engine as claimed in claim 3, characterized in that the predetermined amount of water supplied to said joining section (31) is at a volume ratio of 10 - 80 % with respect to the total fuel injection amount.

## Patentansprüche

1. Verfahren zum Betreiben einer Wasserein-spritz-Dieselmaschine mittels einer Kraft-stoff/Wassereinspritzvorrichtung mit einem Kraftstoffeinspritzventil (40) zum gleichzeitigen Einspritzen von Kraftstoff und Wasser, gekennzeichnet durch die folgenden Schritte, daß zunächst während einer Einspritzung Kraftstoff in einer Menge zwischen 5% oder mehr und 75% oder weniger einer Gesamt-Kraftstoffeinspritzmenge, anschließend eine vorbestimmte Menge an Wasser und schließlich der restliche Kraftstoff eingespritzt werden.

2. Verfahren zum Betreiben einer Wassereinspritz-Dieselmaschine nach Anspruch 1, wobei die vorbestimmte Wassermenge in einem Volumenverhältnis von 10 - 80% in bezug auf die Gesamt-Kraftstoffeinspritzmenge vorliegt.

3. Wassereinspritz-Dieselmaschine, umfassend eine Kraftstoff/Wassereinspritzvorrichtung mit einem Kraftstoffeinspritzventil (40) zum gleichzeitigen Einspritzen von Kraftstoff und Wasser, wobei das Kraftstoffeinspritzventil (40) einen Wasserdurchgang (21) aufweist, in welchem ein Rückschlagventil (13) zum Zulassen nur eines Wasserflusses zu einem Verbindungsabschnitt (31), an welchem ein Kraftstoffdurchgang(22) und der Wasserdurchgang (21) ineinander übergehen, vorgesehen ist, und der Wasserdurchgang (21) ferner mit einem Regelventil (16) verbunden ist, das durch eine Steuervorrichtung (20) (an)steuerbar ist, um eine dem Verbindungsabschnitt (31) zugespeiste Menge an Wasser auf eine vorbestimmte Menge zu begrenzen,
gekennzeichnet durch
einen an einer Stromabseite des Verbindungsabschnitts (31) gelegenen und mit dem Verbindungsabschnitt (31) über einen Teil des Kraft-stoffdurchgangs (22) verbundenen Kraftstoff-vorratsabschnitt (12), wobei der Kraftstoffvor-ratsabschnitt (12) und der genannte Teil des Kraftstoffdurchgangs (22) zwischen dem Kraft-stoffvorratsabschnitt und dem Verbindungsab-schnitt (31) mit einem Gesamtvolumen zur Aufnahme von Kraftstoff in einer Menge zwischen 5% und 75% einer Gesamt-Kraftstoffeinspritzmenge ausgelegt sind, und der Verbindungsabschnitt (31) so ausgelegt ist, daß er praktisch kein Vermischen des zugespeisten Wassers mit Kraftstoff zuläßt, so daß eine Gesamtmenge an Wasser unter Zwischenfügung bzw. Schichtung zwischen Kraftstoffeinspritzmengenanteile eingespritzt wird.

4. Wassereinspritz-Dieselmaschine nach Anspruch 3, dadurch gekennzeichnet, daß die vorbestimmte Menge an dem Verbindungsabschnitt (31) zugespeistem Wasser in einem Volumenverhältnis von 10 - 80% in bezug auf die Gesamt-Kraftstoffeinspritzmenge vorliegt.

## Revendications

1. Un procédé pour actionner un moteur diesel à injection d'eau au moyen d'un dispositif d'injection de carburant/ eau comportant une vanne (40) d'injection de carburant pour injecter simultanément du carburant et de l'eau, caractérisé par les phases consistant à : lors d'une injection, injecter d'abord du carburant à raison de 5 % ou plus à 75 % ou moins de la quantité totale d'injection du carburant, injecter ensuite une quantité prédéterminée d'eau, et injecter finalement le carburant restant.

2. Un procédé pour actionner un moteur diesel à injection d'eau tel que revendiqué dans la Revendication 1, dans lequel ladite quantité prédéterminée d'eau est dans un rapport volumique de 10-80 % par rapport à la quantité totale d'injection de carburant.

3. Un moteur diesel à injection d'eau, comportant un dispositif d'injection de carburant/eau comprenant une vanne (40) d'injection de carburant pour injecter simultanément du carburant et de l'eau, dans lequel ladite vanne (40) d'injection de carburant comporte un trajet d'eau (21) dans lequel est prévue une soupape anti-retour (13) pour admettre seulement un écoulement d'eau vers une partie de jonction (31) dans laquelle un trajet de carburant (22) et ledit trajet d'eau (21) se rejoignent, et
ledit trajet d'eau (21), au surplus, est relié à une vanne de commande (16) qui est commandée par un dispositif de commande (20) pour limiter la quantité d'eau délivrée à ladite partie de jonction (31) à une quantité prédéterminée,
caractérisé par une partie (12) de réservoir de carburant située sur un côté aval de ladite partie de jonction (31) et reliée à ladite partie de jonction (31) par une partie dudit trajet de carburant (22), ladite partie (12) de réservoir de carburant et ladite partie dudit trajet de carburant (22), entre ladite partie (12) de réservoir de carburant et ladite partie de jonction (31), étant agencées pour avoir un volume total permettant de recevoir le carburant à raison de 5 % à 75 % de la quantité totale d'injection de carburant, et ladite partie de jonction (31) étant agencée de manière à essentiellement ne pas permettre le mélange de l'eau délivrée avec le carburant, de sorte que la quantité totale d'eau est injectée en étant comprise entre les quantités d'injection de carburant.

4. Un moteur diesel à injection d'eau tel que revendiqué dans la revendication 3, caractérisé en ce que la quantité prédéterminée d'eau délivrée à ladite partie de jonction (31) est dans un rapport volumique de 10 - 80 % par rapport à la quantité totale d'injection de carburant.

Fig. 1

40

9

22

Fuel

Water

31

12

Fuel

10

21

14

13

$P_P$

11

$P_O$

30

Fig. 2

9

Fig. 3

Fig. 4 (a)

Fig. 4 (b)

Parameter is $Q_W/Q_F$
(water feed rate)

$Q_{FP}/Q_F$

Rate of precedingly injected fuel